# EUROPEAN PATENT SPECIFICATION

(11) **EP 2 621 154 B1**
(45) Date of publication and mention of the grant of the patent: **04.03.2020**
(21) Application number: 10857457.5
(22) Date of filing: 10.11.2010
(51) Int. Cl.: H04L 12/14, H04M 15/00, H04L 29/06

(54) **SYSTEM AND METHOD FOR ACHIEVING CALL TRAFFIC WHOLESALE BASED ON SOFT SWITCH**
SYSTEM UND VERFAHREN FÜR RUFVERKEHR-GROSSKUNDENGESCHÄFT AUF SOFTSWITCH-BASIS
SYSTÈME ET PROCÉDÉ POUR ACCOMPLIR UNE VENTE EN GROS DE TRAFIC D'APPELS SUR LA BASE D'UN COMMUTATEUR LOGICIEL

(30) Priority: 25.09.2010 CN 201010293240
(43) Date of publication of application: 31.07.2013
(73) Proprietor: ZTE Corporation, Shenzhen, Guangdong 518057 (CN)
(72) Inventor: ZHAO, Yuan, Guangdong 518057 (CN); FAN, Chang, Guangdong 518057 (CN)
(74) Representative: Hervouet-Malbec, Sylvie
(86) International application number: PCT/CN2010/078610
(87) International publication number: WO 2012/037744

(56) References cited:
- CN-A- 1 909 577
- CN-A- 1 997 061
- CN-A- 101 365 182
- US-A1- 2002 136 374
- US-A1- 2009 129 580

## Description

### Technical Field

The invention relates to the field of Next Generation Network (NGN), and more especially, to a system and method for achieving traffic wholesale based on soft switch.

### Background of the Related Art

In the field of telecommunications, large international telecom operators have invested and constructed the entire telecommunication network, therefore they have basically mastered all the communication resources. Currently, the competition in the International telecommunications market is increasingly fierce, and when the large operators are in the efforts to improve the business and technical innovation capability, how to take full advantage of backbone network resources, achieve rapid expansion of business scale, and quickly occupy the telecommunications market has become a very urgent problem to be solved by the telecom operators. How to avoid weaknesses in the marketing channels and business development, effectively use the power and resources in various aspects of society, and build up huge business distribution channels at a low cost, achieve rapid expansion of the business and make effective monitoring is a major issue faced by large operator suppliers.

Carrying out traffic wholesale is a fast and efficient solution. Traffic wholesale is that: the large operators sell a certain amount of traffic at a discounted price, in bulk or based on the period of time, to the second-level operators or qualified agents. Therefore, there have been many small operators who usually have specific marketing channels but lack of communication resources, and such operators must rely on those few large operators to operate in some ways such as rental or sharing. Therefore, the large operators are traffic wholesalers, while small ones are traffic lessees.

In the traditional Public Switched Telephone Network (PSTN), the small operators lease from the large operators the E1/T1 (E1 represents the European standard electrical interface rate, and T1 represents the North American and Japanese standard electrical interface rate) trunks to carry out their own communication business, and since the original device capacity is relatively small, it is easy to be physically segmented, therefore, the devices and resources leased by several lessees from one wholesale party are independent with each other.

In traditional PSTN, generally the capacity of the switching devices is relatively small, and trunks are used to connect end offices with the tandem office, and carrying out traffic wholesale is relatively simple, and generally, based on demands of the traffic lessees, a certain number of trunks are directly distributed to the lessees or program-controlled switches with a certain capacity are directly allocated to the lessees, which has many shortcomings:
If the lessees expand or reduce their traffic or the lessees have been changed, it is necessary to distribute the physical devices again, which easily leads to a waste of E1/T1 lines; when device distribution needs to be re-adjusted, it takes a long time; different manpower needs to be allocated to different lessees for maintenance.

In the process of the traditional PSTN evolving to NGN, the capacity of device becomes larger and larger, there are more and more corresponding functions and the functions are more and more complicated, and for traffic wholesale business, if the traditional physical segmentation is still followed, the shortcomings of traffic wholesale in the traditional PSTN are more prominent and become un-affordable, and therefore there is an urgent need to use a new segmentation method to achieve flexible traffic wholesale.

US 2009/129580 A1 discloses a method for routing an Internet Protocol(IP)-based call through a first IP-based network to a second IP-based network. The method include receiving an IP-based call request in the first network; identifying one or more geographic trunk groups that can be used to route the call request out of the first network.

US 2002/136374 A1 discloses a method and system include screening and routing telephone calls, generating calling data reports and discounting billing for a customer' wide area centre/PBX network, which includes an abbreviated dialing plan.

### Summary of the Invention

The present application provides a system according to claim 1 and a method according to claim 4 and a device according to claim 7 to solve the problem how to achieve traffic wholesale in the next generation network system. Further improvements and embodiments are provided in the dependent claims. Any other subject-matter outside the scope of protection of the claims is to be regarded as examples not in accordance with the invention.

The system and method for achieving traffic wholesale based on the soft switch in accordance with the invention use the trunk groups in the NGN environment to perform the logic segmentation on the traffic resources, and establish a corresponding relationship between said trunk groups and said trunk gateway as well as the corresponding relationship between the trunk circuits and the physical circuits of the trunk gateway, and allocate logic resources such as trunk groups, number analysis, routes, trunk circuits and so on to the lessee on the soft switch, then the soft switch controls these logical resources to correspond to the E1/T1 circuit of the gateway, so as to achieve a logical segmentation of material resources in the environment that the capacity of soft switch is large, and let the lessees dynamically use the physical resources according to the allocated trunk groups.

The technical solution of the invention can achieve fast segmentation in the case that the capacity of soft switch is large, through the trunk group performing the logic segmentation on the traffic resources; in the case that the lessees' traffic expands or reduces or the lessees change, the expansion, reduction or modification on logic can be quickly realized without the need to modify the physical devices, which greatly reduces the response time and shortens the period; logic segmentation of traffic resources by the trunk groups can realize that devices can be centrally maintained, and therefore, the end office device maintenance personnel is greatly reduced, and a lot of labor costs are saved; logic segmentation of traffic resources by the trunk group only needs to modify the logic of the soft switch when the change occurs, and it does not need to change the physical resources, which greatly reduces the chance of error and implicitly reduces the costs. Furthermore, the method of charging the trunk groups and the user number can achieve the dynamic occupancy of the trunk circuits, and improves the utilization of the trunk circuits. Finally, the most important role of using the trunk groups to logically segment the traffic resources is to ensure that the traffic wholesale business in the PSTN can continue to be carried out in the soft switch environment in a better way.

### Brief Description of Drawings

FIG. 1 is a diagram of a system for traffic wholesale based on the soft switch in the NGN system.
FIG. 2 is a diagram of the corresponding relationship between logic resources of soft switch and physical resources of trunk gateways in the NGN system.

### Preferred Embodiments of the Invention

To make the objectives, technical solutions and advantages of the invention clearer, the invention will be described in further detail with combination of the accompanying drawings. It should be noted that, without conflict, the embodiments and features of the embodiments in the invention could be combined with each other randomly.

The system and method for achieving traffic wholesale based on soft switch in accordance with the invention use trunk groups in the soft switch to segment traffic resources in the NGN environment, and by configuring the Trunk Gateway (TG) and the soft switch, logic circuit resources of the soft switch and actual physical E1/T1 circuits of the trunk gateway are associated, and during the traffic wholesale, the logic resources of the soft switch are allocated to the lessees to achieve logical segmentation of physical resources, and then the traffic wholesale can be achieved by performing charging and service configurations for the allocated trunk groups. The invention can realize traffic wholesale in the soft switch environment, so as to meet the demands of small operators for lease of the traffic and to ensure that the lessees are independent with each other.

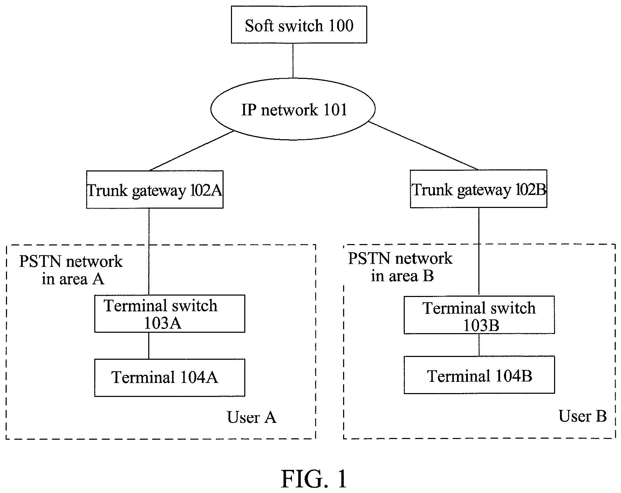

As shown in FIG. 1, the system for achieving traffic wholesale based on soft switch in accordance with the invention comprises:
soft switch 100 and one or more trunk gateways (102A, 102B), and said soft switch and said trunk gateways are connected through the IP network 101. Said trunk gateways control terminal switches and terminals under said terminal switches.

Said trunk gateways are configured to: configure physical resources according to the end office, wherein said physical resource configuration comprises gateway capacity configuration, that is, configuring the number of E1/T1 interfaces; to configure logic resources, and said logic resources on the trunk gateways correspond to specific physical resources, and said E1/T1 interfaces of the trunk gateways correspond to pulse code modulation (PCM) time slots configured on gateway logic, and said PCM time slots correspond to the trunk circuits of the trunk groups on the soft switch through a certain logic relationship; it also needs to configure the media gateway controller. The invention uses the soft switch as a media gateway controller (MGC), needs to configure soft switch information of the gateway controller on the trunk gateway, and associates the soft switch with the trunk gateway through the IP network and the configuration information, and the soft switch controls the connection of the E1/T1 physical circuits of the trunk gateways.

The logic resources of said soft switch comprise one or more trunk groups, and each trunk group comprises a plurality of trunk circuits. Each said trunk gateway corresponds to one or more trunk groups, and part or all of the physical circuits of said trunk gateways have a corresponding relationship with trunk circuits of the corresponding trunk groups; said soft switch allocates logic resources including trunk groups and trunk circuit of the trunk groups to the lessees, and sets charging and service configurations for the trunk groups allocated to the lessees.

Wherein, the soft switch needs to configure the trunk gateways that are controlled by the media gateway controller, and the connection of said trunk gateways can be achieved through the IP address and port; according to the lessees, the restrictions for the trunk groups allocated to the lessees are configured on the soft switch, and the content of main configuration is data for checking the legality, such as the length of the calling and called numbers, IP address restrictions, outgoing trunk group, starting duration, number type, call type, calling user type and so on;
wherein, according to the lessees, it needs to allocate trunk groups to the traffic lessees on the soft switch and allocate trunk circuits to the trunk groups, and configure trunk permission templates corresponding to the trunk groups, and also configure the information, such as the charging categories, the calling and called digit number analysor, and the change of number and so on, of the trunk groups, and said trunk groups are associated with said trunk gateways through the gateway nodes, so that the logic circuit resources of the soft switch corresponds to the physical circuit resources of the trunk gateways. Usually one trunk group can be configured to correspond to one gateway, and for a gateway with large capacity, multiple trunk groups can be configured to correspond to one gateway.

Wherein, according to the lessees, it is required to configure routes for the trunk groups allocated to the lessees on the soft switch; configure number analysis on the soft switch, and configure the digit number analysor in the number analysis, and the analysis prefix configured in the digit number analysor determines the number of users under said digit number analysor, and the analysis prefix of the digit number analysor is associated with the route, and ultimately, the routes are associated with the trunk groups leased by the lessees; and charging rules are configured for the trunk groups of the lessees on the soft switch.

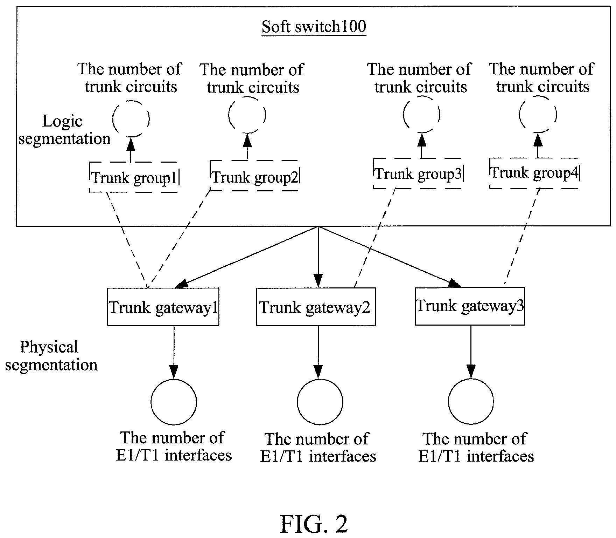

After the configuration for the trunk gateways and the soft switch, as shown in FIG. 2, the trunk groups and trunk circuits, as logic resources of the soft switch, establish a corresponding relationship with the physical resources (E1/T1 physical circuits) of the trunk gateways controlled by the soft switch, and one trunk gateway corresponds to one or more trunk groups. During the traffic wholesale, for the lessees, the soft switch allocates trunk groups and trunk circuits to the lessees, and since the logic resources of the soft switch have established a corresponding relationship with the physical resources of the trunk gateways, said charging and service configurations for the trunk groups are performed to complete the necessary settings for the lessee to perform traffic service, so as to achieve the traffic wholesale according to the lessees. In this process, there is no need to directly configure the physical resources of the trunk gateways, and it is only required to adjust the logic resources of the soft switch. In the case that the lessees change and it needs to increase or decrease resources, add or remove lessees, or modify the lessees' information and permissions, it only needs to perform configuration in the soft switch.

Said soft switch for carrying out traffic wholesale in accordance with the invention can creates trunk groups on the soft switch according to the condition of traffic lessees, and one or more trunk groups correspond to one traffic lessee; according to different demands of the lessees, the number of trunk circuits allocated in the trunk groups corresponding to the lessees can be done. The method for achieving traffic wholesale based on the soft switch in accordance with the invention comprises the following steps:
first, the trunk gateway is configured, and the content of configuration comprises physical resource configuration, logic resource configuration and media gateway controller configuration, and
the configuration of physical resources of the trunk gateways comprises the number of E1/T1 circuit interfaces that can be used by the trunk gateways;
the configuration of logical resources of the trunk gateways comprises: logically segmenting the physical resources of the trunk gateways, and associating the physical resources with the logical resources of the trunk gateways;
the configuration of the media gateway done by the trunk gateways controller is determining the soft switch which is used to control the trunk gateways;
second, the soft switch is configured, and
the configuration of said soft switch comprises: configuring logical resources and the controlled trunk gateways.

The configuration of the logic resources of said soft switch comprises establishing one or more trunk groups, wherein, each trunk group comprises a plurality of trunk circuits; the number of trunk circuits corresponds to the actual number of physical E1/T1 interfaces, and one T1 is equivalent to 24 trunk circuits, and one E1 interface is equivalent to 30 trunk circuits; the trunk circuits of the soft switch correspond to part or all of physical circuits of the trunk gateway according to a certain logic relationship, and the actual physical circuits of the trunk gateway are controlled by the soft switch to achieve the specific call connection.

The configuration of said trunk gateways is: providing information of the trunk gateways controlled by the soft switch, establishing the corresponding relationship between the trunk gateways and the trunk groups, and one trunk gateway may correspond to one or more trunk groups.

The soft switch corresponds to specific trunk gateways via the IP address, and the E1/T1 idle circuits of the trunk gateways are synchronized with trunk circuits that can be allocated on the soft switch in real time, maintaining one-to-one corresponding relationship.

Third, trunk groups are allocated to the lessees on the soft switch according to the condition of traffic lessees;
said soft switch can allocate one or more trunk groups to the lessees, and the trunk circuits of the allocated trunk groups can be used by the lessees for traffic bearer, and the trunk circuits allocated on the soft switch are consistent with the actual physical circuit of the specific trunk gateways corresponding to the trunk groups;
fourth, for the allocated trunk groups, restrictions of the trunk groups on the soft switch are set to check the legality of the information, such as the length of the calling and called numbers, the call start time and so on, in the trunk groups; routes are allocated, and the digit number analysor is configured (one trunk group corresponds to one digit number analysor), and the analysis prefix is configured for analysor, and said analysis prefix is associated with said route analysis, and said route analysis is associated with specific routes, and the ultimate route is associated with the trunk groups; and the number of user numbers determined by the analysis prefix, since one trunk group corresponds to one digit number analysor, the digit number analysor corresponds to the analysis prefix, and the number of users determined by the analysis prefix determines the number of users in the trunk group; during the traffic, through the route analysis, the corresponding route is found;
fifth, according to the condition of traffic lessees, charging rules are set for the trunk groups, and related charging items are configured.

When a PSTN user initiates a call request in the case of the access of the end office, the terminal switch sends the call request to the trunk gateway through the E1/T1 circuit, and the trunk gateway sends the information to the soft switch via an IP network, and the soft switch performs operations such as number analysis, route analysis and so on, and if the called end office has idle circuits and the called user is idle, then the call is established, and the call can be carried out; in the case of tandem access, when a tandem user accesses, the tandem gateway reports the call information to the soft switch, and after the soft switch performs number analysis and route analysis, it selects a route to go out of the office to completes the tandem.

The traffic wholesale in the case of the tandem access can be achieved according to the following steps: configuring the trunk gateway during tandem to be associated with the soft switch; configuring the trunk gateway node for the tandem on the soft switch; creating multiple trunk groups corresponding to the trunk gateway node on the soft switch, and the trunk groups being allocated to one or more lessees during the tandem access, the lessees creating multiple trunk groups to correspond to the mass trunk gateways as the tandem; and setting charging rules for trunk group; through the above-mentioned several steps, rental logic resources are allocated to the traffic lessees, and when a user of one lessee calls, the soft switch performs the analysis processing according to the condition of the lessee, and if it is legal, an E1/T1 trunk circuit corresponding to the gateway is dynamically allocated to the call.

As shown in FIG. 1, the users of the lessees can call through the following process:
first, the PSTN user 104A in office A initiates a call request, and the terminal switch 103A in office A first performs number analysis, and if the calling number is legal and there is an idle trunk circuit, the terminal switch in office A packages the call information (including the called number, source point code, destination point code and Circuit Identification Code (CIC) and so on), and sends the information to the trunk gateway 102A in office A through the trunk or fiber.

The trunk gateway 102A in the office A converts the information into IP stream, and sends the IP stream to the soft switch 100 through the IP network 101;
for the received information, the soft switch 100 performs calling number analysis to find out the number prefix associated with the calling number, and finds the corresponding route based on the number prefix, and then finds the trunk group corresponding to the calling number according to the route analysis, and the soft switch 100 analyzes the traffic lessee corresponding to the trunk group, and if it is legal, with respect to the called number, the soft switch 100 performs number analysis, route analysis, and selects a route to go out of the office, and the soft switch 100 checks whether there is an idle trunk circuit in office B or not:
if there is no idle trunk circuit in the office B, the call cannot be established, and the caller is notified to hang off;
if there is an idle trunk circuit in office B, the soft switch 100 sends information of the idle trunk circuit in the office B to the calling office (office A), and sends the calling information (including the caller's CIC) to the gateway 102B of the office B (destination office), and the gateway 102B of the office B prepares resources and notifies the terminal switch 103B of the office B to inquire the user status information:
   if the called user 104B is busy, the information that the user is busy is fed back to the soft switch 100, and if the called user is idle, the tone is sent to the called user;
   if the called user 104B picks up the phone, the call is established, and the charging is started, and the terminal switch 103 A of the office A encodes the circuit domain voice resources into IP stream via the gateway 102A of the office A and sends the IP stream to the trunk gateway 102B of the office B, and the gateway 102B of the office B decodes the IP stream information into the circuit domain voice resources and sends them to the terminal switch 103B of the office B, and vice versa, the request, establishment, and release of the call are all completed through the signaling gateway, and the signaling plays an important control role in the call process.

This embodiment also provides a soft switch device, and said soft switch device connects with one or more trunk gateways through an IP network, and said soft switch device is configured to:
the logical resource configuration of said soft switch device comprises: one or more trunk groups, each trunk group comprises a plurality of trunk circuits; each said trunk gateway corresponds to one or more trunk groups, and part or all of physical circuits of said trunk gateways establish a corresponding relationship with trunk circuits of the corresponding trunk groups;
said soft switch device allocates logic resources including trunk groups and trunk circuits of said trunk groups to the lessees, and sets charging and service configurations for the trunk groups allocated to the lessees.

Preferably, said service configuration set by the soft switch device for said trunk groups allocated to the lessees comprises: route allocation and number analysis;
said number analysis is configured with a digit number analysor, and one digit number analysor corresponds to one trunk group;
said digit number analysor is configured with an analysis prefix, and said analysis prefix is associated with route analysis to determine the number of users that the trunk group has.

Preferably, said soft switch device is also configured to: configure restrictions for the trunk groups allocated to the lessees, wherein the content of said restrictions comprises one or more of the length of the calling and called numbers, IP address restriction, outgoing trunk group, starting duration, number type, call type and calling user type in order for checking the legality.

Preferably, said soft switch is set to correspond to the trunk gateways through IP address, and physical circuits of the trunk gateway and trunk circuits of the soft switch are synchronized in real time, and said idle physical circuits correspond to the trunk circuits that can be allocated.

The ordinary person skilled in the art can understand that all or part of the steps in the aforementioned method can be implemented by the program instructing the related hardware, and the program can be stored in a computer readable storage medium, such as read-only memory, disk, or CD-ROM and so on. Optionally, all or part of the steps in the aforementioned embodiments can also be implemented with one or more integrated circuits, and accordingly, each module/unit in the above embodiments can be implemented in the form of hardware or software functional modules. The invention is not limited to any particular form of hardware and software combination.

The above description is only preferred embodiments of the invention and should not be used to limit the invention, and for an ordinary person skilled in the art, the invention can have a variety of changes and modifications. Any changes, equivalent replacements and improvements made without departing from the scope of the invention as it is depicted in the appended claims.

### Industrial Applicability

The technical solution of the invention can achieve fast segmentation in the case that the capacity of soft switch is large, through the trunk group performing the logic segmentation on the traffic resources; in the case that the lessees' traffic expands or reduces or the lessees change, the expansion, reduction or modification on logic can be quickly realized without the need to modify the physical devices, which greatly reduces the response time and shortens the period; logic segmentation of traffic resources by the trunk groups can realize that devices can be centrally maintained, and therefore, the end office device maintenance personnel is greatly reduced, and a lot of labor costs are saved; logic segmentation of traffic resources by the trunk group only needs to modify the logic of the soft switch when the change occurs, and it does not need to change the physical resources, which greatly reduces the chance of error and implicitly reduces the costs. Furthermore, the method of charging the trunk groups and the user number can achieve the dynamic occupancy of the trunk circuits, and improves the utilization of the trunk circuits. Finally, the most important role of using the trunk groups to logically segment the traffic resources is to ensure that the traffic wholesale business in the PSTN can continue to be carried out in the soft switch environment in a better way.

## Claims

1. A system for achieving traffic wholesale based on soft switch, comprising: a soft switch according to claim 7, as well as one or more trunk gateways.

2. The system of claim 1, wherein,
the service configuration set by the soft switch for the trunk groups allocated to the traffic lessees comprises: route allocation and number analysis;
said number analysis is configured with a digit number analysor, and one digit number analysor corresponds to one trunk group;
said digit number analysor is configured with an analysis prefix, and said analysis prefix is associated with route analysis to determine the number of users that the trunk group has.

3. The system of claim 1, wherein,
said soft switch sets restrictions for the trunk groups allocated to the traffic lessees, and the content of said restrictions comprises one or more of the length of calling and called numbers, IP address restriction, outgoing trunk group, starting duration, number type, call type and calling user type in order for checking the legality.

4. A method for achieving traffic wholesale based on soft switch, comprising:
configuring physical resources for trunk gateways, configuring logic resources for soft switch, and establishing a corresponding relationship of the physical resources and logical resources between said soft switch and controlled trunk gateways wherein, said logic resources configured by said soft switch are one or more trunk groups corresponding to said trunk gateway, and each trunk group comprises a plurality of trunk circuits; said physical resources configured by the trunk gateway are physical circuits; part or all of the physical circuits of the trunk gateway establish a corresponding relationship with the trunk circuits of corresponding trunk group; and
said soft switch allocating the logical resources to traffic lessees and setting charging and service configurations for the logic resources;
wherein said soft switch corresponds to the trunk gateways through IP address, and E1/T1 idle circuits of the trunk gateways are synchronized with trunk circuits that can be allocated on the soft switch in real time, maintaining one-to-one corresponding relationship.

5. The method of claim 4, wherein, the service configuration set by the soft switch for trunk groups allocated to the traffic lessees comprises: route allocation and number analysis;
said number analysis is configured with a digit number analysor, and one digit number analysor corresponds to one trunk group;
said digit number analysor is configured with an analysis prefix and said analysis prefix is associated with route analysis to determine the number of users that the trunk group has.

6. The method of claim 4, further comprising: said soft switch also configuring restrictions for trunk groups allocated to the traffic lessees, wherein the content of said restrictions comprises one or more of the length of calling and called numbers, IP address restriction, outgoing trunk group, starting duration, number type, call type and calling user type in order for checking the legality.

7. A soft switch device, wherein said soft switch device connects with one or more trunk gateways through an IP network, and said soft switch device is configured below:
the logical resource configuration of said soft switch device comprising one or more trunk groups, each trunk group comprising a plurality of trunk circuits; each said trunk gateway corresponding to one or more trunk groups, and part or all of physical circuits of said trunk gateways establishing a corresponding relationship with the trunk circuits of corresponding trunk groups;
said soft switch device allocating logic resources including the trunk groups and the trunk circuits of said trunk groups to traffic lessees, and setting charging and service configurations for the trunk groups allocated to the lessees;
wherein said soft switch corresponds to the trunk gateways through IP address, and E1/T1 idle circuits of the trunk gateways are synchronized with trunk circuits that can be allocated on the soft switch in real time, maintaining one-to-one corresponding relationship.

8. The soft switch device of claim 7, wherein, said service configuration set by the soft switch device for said trunk groups allocated to the traffic lessees comprises: route allocation and number analysis;
said number analysis is configured with a digit number analysor, and one digit number analysor corresponds to one trunk group;
said digit number analysor is configured with an analysis prefix and said analysis prefix is associated with route analysis to determine the number of users that the trunk group has.

9. The soft switch device of claim 7, wherein, said soft switch device is also configured to: configure restrictions for the trunk groups allocated to the traffic lessees, wherein the content of said restrictions comprise one or more of the length of calling and called numbers, IP address restriction, outgoing trunk group, starting duration, number type, call type and calling user type in order for checking the legality.

## Patentansprüche

1. System zum Erreichen von Datenverkehr-Großhandel auf Softswitch-Basis, umfassend: einen Softswitch nach Anspruch 7 sowie ein oder mehrere Datenkabelbündel-Gateways (Trunk-Gateways).

2. System nach Anspruch 1, wobei
die Dienstkonfiguration, die durch den Softswitch für die Trunk-Gruppen, die den Datenverkehr-Mietern zugeteilt sind, festgelegt ist, Folgendes umfasst: Routenzuweisung und Nummernanalyse,
wobei die Nummernanalyse mit einem Ziffernummernanalysator konfiguriert ist und ein einzelner Ziffernummernanalysator einer einzelnen Trunk-Gruppe entspricht,
wobei der Ziffernummernanalysator mit einem Analysepräfix konfiguriert ist und das Analysepräfix mit einer Routenanalyse assoziiert ist, um die Zahl von Nutzern, die die Trunk-Gruppe aufweist, zu bestimmen.

3. System nach Anspruch 1, wobei
der Softswitch Beschränkungen für die Trunk-Gruppen festlegt, die den Datenverkehr-Mietern zugeteilt sind, und der Inhalt der Beschränkungen eines oder mehrere der Folgenden umfasst: die Länge anrufender und angerufener Nummern, IP-Adressenbeschränkung, ausgehende Trunk-Gruppe, Startdauer, Nummerntyp, Anruftyp und anrufender Nutzertyp, um die Rechtmäßigkeit zu prüfen.

4. System zum Erreichen von Datenverkehr-Großhandel auf Softswitch-Basis, umfassend:
Konfigurieren physischer Ressourcen für Trunk-Gateways, Konfigurieren logischer Ressourcen für einen Softswitch und Herstellen einer entsprechenden Beziehung der physischen Ressourcen und logischen Ressourcen zwischen dem Softswitch und gesteuerten Trunk-Gateways, wobei die logischen Ressourcen, die von dem Softswitch konfiguriert werden, eine oder mehrere Trunk-Gruppen sind, die dem Trunk-Gateway entsprechen, und jede Trunk-Gruppe mehrere Trunk-Schaltungen umfasst, wobei die physischen Ressourcen, die durch den Trunk-Gateway konfiguriert werden, physische Schaltungen sind, wobei ein Teil oder alle der physischen Schaltungen des Trunk-Gateways eine entsprechende Beziehung mit den Trunk-Schaltungen der entsprechenden Trunk-Gruppe herstellen, und
Zuteilen der logischen Ressourcen zu Datenverkehr-Mietern und Festlegen der Gebühren und Dienstkonfigurationen für die logischen Ressourcen durch den Softswitch,
wobei der Softswitch den Trunk-Gateways über IP-Adresse entspricht und in Ruhe befindliche E1/T1-Schaltungen der Trunk-Gateways mit Trunk-Schaltungen synchronisiert werden, die auf dem Softswitch in Echtzeit zugeteilt werden können, wobei eine entsprechende Eins-zu-eins-Beziehung beibehalten wird.

5. Verfahren nach Anspruch 4, wobei
die Dienstkonfiguration, die durch den Softswitch für die Trunk-Gruppen, die den Datenverkehr-Mietern zugeteilt werden, eingestellt wird, Folgendes umfasst: Routenzuweisung und Nummernanalyse,
wobei die Nummernanalyse mit einem Ziffernummernanalysator konfiguriert wird und ein einzelner Ziffernummernanalysator einer einzelnen Trunk-Gruppe entspricht,
wobei der Ziffernummernanalysator mit einem Analysepräfix konfiguriert wird und das Analysepräfix mit einer Routenanalyse assoziiert wird, um die Zahl von Nutzern, die die Trunk-Gruppe aufweist, zu bestimmen.

6. Verfahren nach Anspruch 4, ferner umfassend:
außerdem Konfigurieren von Beschränkungen für die Trunk-Gruppen, die den Datenverkehr-Mietern zugeteilt sind, durch den Softswitch, wobei der Inhalt der Beschränkungen eines oder mehrere der Folgenden umfasst: die Länge anrufender und angerufener Nummern, IP-Adressenbeschränkung, ausgehende Trunk-Gruppe, Startdauer, Nummerntyp, Anruftyp und anrufender Nutzertyp, um die Rechtmäßigkeit zu prüfen.

7. Softswitch-Vorrichtung, wobei die Softswitch-Vorrichtung sich über ein IP-Netzwerk mit einem oder mehreren Trunk-Gateways verbindet und die Softswitch-Vorrichtung wie folgt konfiguriert ist:
die Konfiguration der logischen Ressourcen der Softswitch-Vorrichtung umfasst eine oder mehrere Trunk-Gruppen, wobei jede Trunk-Gruppe mehrere Trunk-Schaltungen umfasst, jedes Trunk-Gateway einer oder mehreren Trunk-Gruppen entspricht und ein Teil oder alle der physischen Schaltungen des Trunk-Gateways eine entsprechende Beziehung mit den Trunk-Schaltungen entsprechender Trunk-Gruppen herstellen,
die Softswitch-Vorrichtung teilt Datenverkehr-Mietern logische Ressourcen einschließlich der Trunk-Gruppen und der Trunk-Schaltungen der Trunk-Gruppen zu und legt die Gebühren und Dienstkonfigurationen für die Trunk-Gruppen, die den Mietern zugeteilt werden, fest,
wobei der Softswitch den Trunk-Gateways über IP-Adresse entspricht und in Ruhe befindliche E1/T1-Schaltungen der Trunk-Gateways mit Trunk-Schaltungen synchronisiert werden, die auf dem Softswitch in Echtzeit zugeteilt werden können, wobei eine entsprechende Eins-zu-eins-Beziehung beibehalten wird.

8. Softswitch-Vorrichtung nach Anspruch 7, wobei
die Dienstkonfiguration, die durch die Softswitch-Vorrichtung für die Trunk-Gruppen, die den Datenverkehr-Mietern zugeteilt sind, festgelegt ist, Folgendes umfasst: Routenzuweisung und Nummernanalyse,
wobei die Nummernanalyse mit einem Ziffernummernanalysator konfiguriert ist und ein einzelner Ziffernummernanalysator einer einzelnen Trunk-Gruppe entspricht,
wobei der Ziffernummernanalysator mit einem Analysepräfix konfiguriert ist und das Analysepräfix mit einer Routenanalyse assoziiert ist, um die Zahl von Nutzern, die die Trunk-Gruppe aufweist, zu bestimmen.

9. Softswitch-Vorrichtung nach Anspruch 7, 8, wobei
die Softswitch-Vorrichtung außerdem für Folgendes konfiguriert ist: Konfigurieren von Beschränkungen für die Trunk-Gruppen, die den Datenverkehr-Mietern zugeteilt sind, wobei der Inhalt der Beschränkungen eines oder mehrere der Folgenden umfasst: die Länge anrufender und angerufener Nummern, IP-Adressenbeschränkung, ausgehende Trunk-Gruppe, Startdauer, Nummerntyp, Anruftyp und anrufender Nutzertyp, um die Rechtmäßigkeit zu prüfen.

## Revendications

1. Système destiné à accomplir une vente en gros de trafic sur la base d'un commutateur logiciel, comprenant : un commutateur logiciel selon la revendication 7, ainsi qu'une ou plusieurs passerelles de circuits de jonction.

2. Système selon la revendication 1, dans lequel :
la configuration de service définie par le commutateur logiciel pour les faisceaux de circuits de jonction affectés aux preneurs de trafic comprend : une affection d'itinéraire et une analyse de numéros ;
ladite analyse de numéros est configurée avec un analyseur de numéros à chiffres, et un analyseur de numéros à chiffres correspond à un faisceau de circuits de jonction ;
ledit analyseur de numéros à chiffres est configuré avec un préfixe d'analyse, et ledit préfixe d'analyse est associé à une analyse d'itinéraire en vue de déterminer le nombre d'utilisateurs que présente le faisceau de circuits de jonction.

3. Système selon la revendication 1, dans lequel :
ledit commutateur logiciel établit des restrictions pour les faisceaux de circuits de jonction affectés aux preneurs de trafic, et le contenu desdites restrictions comprend un ou plusieurs éléments parmi la longueur des numéros appelants et appelés, une restriction d'adresse IP, un faisceau de circuits de jonction sortant, une durée de départ, un type de numéro, un type d'appel et un type d'utilisateur appelant afin de vérifier la légalité.

4. Procédé pour atteindre une vente en gros de trafic sur la base d'un commutateur logiciel, comprenant les étapes ci-dessous consistant à ou dans lesquelles :
configurer des ressources physiques pour des passerelles de circuits de jonction, configurer des ressources logiques pour un commutateur logiciel, et établir une relation de correspondance des ressources physiques et des ressources logiques entre ledit commutateur logiciel et des passerelles de circuits de jonction commandées, dans lequel, lesdites ressources logiques configurées par ledit commutateur logiciel correspondent à un ou plusieurs faisceaux de circuits de jonction correspondant à ladite passerelle de circuits de jonction, et chaque faisceau de circuits de jonction comprend une pluralité de circuits de jonction ; lesdites ressources physiques configurées par la passerelle de circuits de jonction sont des circuits physiques ; et tout ou partie des circuits physiques de la passerelle de circuits de jonction établissent une relation de correspondance avec les circuits de jonction du faisceau de circuits de jonction correspondant ; et
ledit commutateur logiciel affecte les ressources logiques à des preneurs de trafic, et définit des configurations de taxation et de service pour les ressources logiques ;
dans lequel ledit commutateur logiciel correspond aux passerelles de circuits de jonction à travers une adresse IP, et des circuits au repos E1/T1 des passerelles de circuits de jonction sont synchronisés avec des circuits de jonction qui peuvent être affectés sur le commutateur logiciel en temps réel, en maintenant une relation de correspondance biunivoque.

5. Procédé de la revendication 4, dans lequel :
la configuration de service définie par le commutateur logiciel pour des faisceaux de circuits de jonction affectés aux preneurs de trafic comprend : une affection d'itinéraire et une analyse de numéros ;
ladite analyse de numéros est configurée avec un analyseur de numéros à chiffres, et un analyseur de numéros à chiffres correspond à un faisceau de circuits de jonction ;
ledit analyseur de numéros à chiffres est configuré avec un préfixe d'analyse, et ledit préfixe d'analyse est associé à l'analyse d'itinéraire en vue de déterminer le nombre d'utilisateurs que présente le faisceau de circuits de jonction.

6. Procédé selon la revendication 4, comprenant en outre l'étape ci-dessous dans laquelle :
ledit commutateur logiciel configure également des restrictions pour des faisceaux de circuits de jonction affectés aux preneurs de trafic, dans lequel le contenu desdites restrictions comprend un ou plusieurs éléments parmi la longueur des numéros appelants et appelés, une restriction d'adresse IP, un faisceau de circuits de jonction sortant, une durée de départ, un type de numéro, un type d'appel et un type d'utilisateur appelant afin de vérifier la légalité.

7. Dispositif de commutateur logiciel, dans lequel ledit dispositif de commutateur logiciel se connecte à une ou plusieurs passerelles de circuits de jonction à travers un réseau IP, et dans lequel ledit dispositif de commutateur logiciel est configuré comme suit :
la configuration de ressources logiques dudit dispositif de commutateur logiciel comprend un ou plusieurs faisceaux de circuits de jonction, chaque faisceau de circuits de jonction comprend une pluralité de circuits de jonction ; chacune desdites passerelles de circuits de jonction correspond à un ou plusieurs faisceaux de circuits de jonction, et tout ou partie des circuits physiques desdites passerelles de circuits de jonction établissent une relation de correspondance avec les circuits de jonction des faisceaux de circuits de jonction correspondants ;
ledit dispositif de commutateur logiciel affecte des ressources logiques incluant les faisceaux de circuits de jonction et les circuits de jonction desdits faisceaux de circuits de jonction à des preneurs de trafic, et établit des configurations de taxation et de service pour les faisceaux de circuits de jonction affectés aux preneurs ;
dans lequel ledit commutateur logiciel correspond aux passerelles de circuits de jonction à travers une adresse IP, et des circuits au repos E1/T1 des passerelles de circuits de jonction sont synchronisés avec des circuits de jonction qui peuvent être affectés sur le commutateur logiciel en temps réel, en maintenant une relation de correspondance biunivoque.

8. Dispositif de commutateur logiciel selon la revendication 7, dans lequel :
ladite configuration de service définie par le dispositif de commutateur logiciel pour lesdits faisceaux de circuits de jonction affectés aux preneurs de trafic comprend : une affection d'itinéraire et une analyse de numéros ;
ladite analyse de numéros est configurée avec un analyseur de numéros à chiffres, et un analyseur de numéros à chiffres correspond à un faisceau de circuits de jonction ;
ledit analyseur de numéros à chiffres est configuré avec un préfixe d'analyse, et ledit préfixe d'analyse est associé à une analyse d'itinéraire en vue de déterminer le nombre d'utilisateurs que présente le faisceau de circuits de jonction.

9. Dispositif de commutateur logiciel selon la revendication 7, dans lequel :
ledit dispositif de commutateur logiciel est également configuré de manière à : configurer des restrictions pour les faisceaux de circuits de jonction affectés aux preneurs de trafic, dans lequel le contenu desdites restrictions comprend un ou plusieurs éléments parmi la longueur des numéros appelants et appelés, une restriction d'adresse IP, un faisceau de circuits de jonction sortant, une durée de départ, un type de numéro, un type d'appel et un type d'utilisateur appelant afin de vérifier la légalité.
